# EUROPÄISCHE PATENTSCHRIFT

(11) **EP 4 294 680 B1**
(45) Veröffentlichungstag und Bekanntmachung des Hinweises auf die Patenterteilung: **09.07.2025**
(21) Anmeldenummer: 22702949.3
(22) Anmeldetag: 31.01.2022
(51) Int. Cl.: B60S 1/48, B60S 1/52, F16L 53/38, H05B 3/58

(54) **DÜSENSYSTEM ZUM REINIGEN EINES FAHRZEUGTEILS, INSBESONDERE EINER SCHEIBE EINES KRAFTFAHRZEUGS, UND REINIGUNGSVERFAHREN**
NOZZLE SYSTEM FOR CLEANING A VEHICLE PART, IN PARTICULAR A WINDOW OF A MOTOR VEHICLE, AND CLEANING METHOD
SYSTÈME DE BUSES DESTINÉ AU NETTOYAGE D'UNE PARTIE DE VÉHICULE, EN PARTICULIER D'UNE VITRE D'UN VÉHICULE AUTOMOBILE, ET PROCÉDÉ DE NETTOYAGE

(30) Priorität: 18.02.2021 DE 102021103869
(43) Veröffentlichungstag der Anmeldung: 27.12.2023
(73) Patentinhaber: Bayerische Motoren Werke Aktiengesellschaft, 80809 München (DE)
(72) Erfinder: BIALETZKI, Tobias, 91785 Pleinfeld (DE); BEITELSCHMIDT, Maximilian, 83629 Weyarn (DE)
(86) Internationale Anmeldenummer: PCT/EP2022/052219
(87) Internationale Veröffentlichungsnummer: WO 2022/175067

(56) Entgegenhaltungen:
- EP-A1- 0 456 024
- EP-A1- 1 958 832
- EP-A2- 2 078 647
- DE-A1- 3 709 308

## Beschreibung

Die Erfindung betrifft ein Düsensystem zum Reinigen eines Fahrzeugteils und ein Verfahren zum Reinigen eines Fahrzeugteils. Das Fahrzeugteil ist insbesondere eine Scheibe eines Kraftfahrzeugs.

Zum Reinigen von Fahrzeugteilen und insbesondere von Fahrzeugscheiben werden in vielen Fällen Düsensysteme verwendet. Beispielsweise werden in verschiedenen Klassen von Kraftfahrzeugen an der Unterseite der Frontklappe des Fahrzeugs sogenannte Düsenketten mit mehreren Düsen verbaut, um mit Hilfe eines Wasch- bzw. Reinigungsfluids die Reinigung der Frontscheibe eines Kraftfahrzeugs zu gewährleisten. Dadurch kann auf Wunsch des Fahrers über die Düsen Waschwasser auf die Frontscheibe aufgebracht werden. Um eine bessere Funktion bei Tieftemperaturen bzw. ein Zufrieren an der Austrittsstelle des Waschfluids aus dem Düsenkörper zu gewährleisten, verfügen die Düsenketten über eine Heizung.

Derartige Düsenketten mit einer Heizfunktion basieren zumeist auf dem Prinzip der PTC (Positive Temperature Coefficient) Heizung. Dabei befindet sich in jedem Düsenkörper ein PTC Element. Die PTC Elemente sind elektrisch in Reihe geschaltet. Ein Nachteil bei diesem Heizkonzept sind die vergleichsweise hohen Kosten der PTC Elemente. Ein weiterer Nachteil liegt darin, dass der Verbau der PTC Elemente im Düsenkörper sehr aufwendig ist, da dies durch einen Verklebeprozess erfolgt. Insbesondere ist hierbei eine vollautomatische Montage nicht möglich.

Alternativ dazu werden oftmals andere Heizkonzepte genutzt, welche von der PTC-Technologie abweichen. Diese verwenden in vielen Fällen einen durch die gesamte Düsenkette verlegten Heizdraht, welcher die gesamte Düsenkette, d.h. den Düsenkörper und die Verbindungsschläuche, gleichermaßen beheizt. Hierbei besteht jedoch der Nachteil, dass nicht nur der für die Arbeitsweise der Düsenkette entscheidende Düsenkörper, sondern auch die Schlauchverbinder zwischen den Düsenkörpern beheizt werden. Dies führt verglichen mit der PTC-Heizung zu einem wesentlich höheren Energieverbrauch

Ein Beispiel für eine Reinigungsvorrichtung, die mit einem Heizdraht beheizt wird, ist in der Druckschrift DE 10 2018 221 354 A1 beschrieben. Dabei ist in einem Gehäuse eine mit einer Reinigungsflüssigkeit befüllbare Kammer ausgebildet, die hydraulisch mit wenigstens einer Sprühdüse für das Reinigungsfluid verbindbar ist. Ein aufheizbarer Heizdraht ragt in die Kammer hinein. Um eine besonders schnelle Enteisung zu ermöglichen, ist in der Kammer ein Wärmeleitelement zur Vergrößerung einer wärmeübertragenden Konvektionsfläche angeordnet.

Als ein weiteres Beispiel beschreibt die Druckschrift DE 10 2015 215 932 A1 ein Düsensystem zum Reinigen einer Scheibe eines Kraftfahrzeuges, das an einem Wischerarm angebracht ist. Das Düsensystem umfasst eine Düse für einen Austritt einer Reinigungsflüssigkeit, ein Rohr, ein Ventil und einen Heizdraht. Die Düse, das Ventil und das Rohr bilden einen durch das Ventil schaltbaren Kanal, wobei der Heizdraht in dem Rohr angeordnet ist.

Das Dokument DE 7431778 U beschreibt eine elektrische Heizeinrichtung für Spritzdüsen von Fahrzeugscheibenwaschvorrichtungen, mit einem Heizdraht, der in der Bohrung der Spritzdüse angebracht ist.

EP 0456 024 A1 beschreibt einen elektrisch beheizten Schlauch für Scheibenwachanlagen in Fahrzeugen. Darin ist ein Heizleiter in Form eines Koaxialkabels mit einem innen liegenden Kupferleiter und einem Drahtgeflecht, das diesen umgibt. Im Bereich eines der Schlauchenden sind diese miteinander verbunden.

Weitere Heizeinrichtungen für Scheibenwaschanlagen sind in den Druckschriften DE 37 09 308 A1, EP 1 958 832 A1 und EP 2 078 647 A2 beschrieben.

Es ist die Aufgabe der Erfindung, ein Düsensystem und ein Reinigungsverfahren zur Reinigung von Fahrzeugteilen und insbesondere von Fahrzeugscheiben zu schaffen, das wirksam beheizt wird, mit geringem Aufwand und zu geringen Kosten herstellbar ist, und im Betrieb nur einen geringen Energieverbrauch hat.

Die Aufgabe wird gelöst durch die Gegenstände der unabhängigen Patentansprüche. Weitere vorteilhafte Merkmale und Details ergeben sich aus den abhängigen Ansprüchen.

Gemäß einem ersten Aspekt der Erfindung wird ein Düsensystem zum Reinigen eines Fahrzeugteils und insbesondere einer Fahrzeugscheibe geschaffen, umfassend mindestens einen Düsenkörper mit einer Düse zum Aufbringen einer Reinigungsflüssigkeit auf das Fahrzeugteil, eine Fluidleitungsanordnung, die zum Anschluss an ein fluidbasiertes Reinigungssystem des Fahrzeugs ausgebildet ist, um die Reinigungsflüssigkeit zu dem Düsenkörper zu leiten, und einen elektrisch leitenden Heizdraht, der durch die Fluidleitungsanordnung und durch den mindestens einen Düsenkörper verläuft, wobei der Heizdraht Abschnitte umfasst, die in Abhängigkeit von ihrer jeweiligen Position in dem Düsensystem unterschiedliche Querschnitte aufweisen. Dabei weist der Heizdraht in einem Bereich innerhalb des Düsenkörpers einen geringeren Querschnitt auf als in einem Bereich der Fluidleitungsanordnung außerhalb des Düsenkörpers, so dass im Bereich des Düsenkörpers wesentlich mehr Wärmeenergie als in der Fluidleitungsanordnung eingebracht wird.

Durch die Erfindung wird eine besonders effektive Heizung des Düsensystems bei geringem Energieverbrauch ermöglicht. Die eingebrachte Energie kann effizient dort genutzt werden, wo sie tatsächlich benötigt wird. Dabei ist der Aufwand zur Herstellung gering und verursacht nur geringe Kosten, da keine PTC-Elemente mehr erforderlich sind, die relativ teuer sind und zudem auch noch einen hohen Aufwand beim Verbau benötigen.

Der Grundgedanke der Erfindung liegt insbesondere darin, dass der Heizdraht unterschiedliche Querschnitte je nach Position in der Düsenkette aufweist. Bevorzugt hat das Düsensystem mehrere Düsenkörper, die hintereinander angeordnet und durch die Fluidleitungsanordnung miteinander verbunden sind. Dabei sind ein oder mehrere Düsenkörper so ausgestaltet, dass ein Teil der jeweils zugeführten Reinigungsflüssigkeit an dessen Düse austritt, und ein anderer Teil der Reinigungsflüssigkeit zu einem in Flussrichtung nachgeschalteten Düsenelement weitergeleitet wird.

Bevorzugt umfasst die Fluidleitungsanordnung mehrere Abschnitte, die mehrere voneinander beabstandete Düsenkörper miteinander verbinden. Vorteilhafterweise bilden die Abschnitte der Fluidleitungsanordnung und die Düsenkörper einen durchgehenden Fluidkanal, in dem sich der Heizdraht insbesondere durchgehend erstreckt.

Insbesondere wird die Fluidleitungsanordnung durch ein Schlauchsystem gebildet, wobei die Düsenkörper durch einzelne Schlauchabschnitte verbunden sind.

Der Heizdraht verläuft vorteilhaft durch das komplette Schlauchsystem der Düsenkette und durch die Düsen selbst.

Beispielsweise besitzt der Heizdraht im Bereich von Schlauchstücken, welche Fluidleitungen bilden und zum Beispiel die Düsen verbinden, einen verhältnismäßig hohen Querschnitt, wohingegen der Querschnitt des Heizdrahts im Bereich der Düsen im Verhältnis dazu sehr gering ist.

Durch die unterschiedlichen Widerstände des Heizdrahts in den Bereichen des dicken und dünnen Querschnitts wird erreicht, dass sich der Heizdraht nur an den dünnen Stellen maßgeblich erwärmt. Diese Stellen dünnen Querschnitts liegen vorteilhafterweise direkt in den Düsenkörpern selbst.

Vorteilhaft beträgt der Durchmesser des Heizdrahts im Bereich der ein oder mehreren Düsenkörper weniger als 1/5, bevorzugt weniger als 1/10, und insbesondere bevorzugt weniger als 1/20 seines Durchmessers im Bereich der Fluidleitungsanordnung.

Gemäß einem zweiten Aspekt der Erfindung wird ein Verfahren zum Reinigen eines Fahrzeugteils und insbesondere einer Fahrzeugscheibe angegeben, umfassend die Schritte:
Zuführen einer Reinigungsflüssigkeit durch eine Fluidleitungsanordnung zu mindestens einer in einem Düsenkörper ausgebildeten Düse; und Aufbringen der Reinigungsflüssigkeit auf das Fahrzeugteil mittels der Düse; wobei der Düsenkörper durch einen Heizdraht geheizt wird, der in der Fluidleitungsanordnung zum Düsenkörper verläuft, und wobei im Bereich des Düsenkörpers mittels unterschiedlicher Querschnitte des Heizdrahts wesentlich mehr Wärmeenergie eingebracht wird als in der Fluidleitungsanordnung.

Die Erfindung ermöglicht insbesondere einen geringen Energieverbrauch, da eine gezielte Heizung an den Stellen der Düsenkörper erfolgt.

Bevorzugt wird die Reinigungsflüssigkeit mittels der Fluidleitungsanordnung mehreren Düsenkörpern zugeführt, die jeweils mit dem Heizdraht gezielt beheizt werden.

Insbesondere wird das Reinigungsverfahren mit einem erfindungsgemäßen Düsensystem durchgeführt.

Gemäß einem weiteren Aspekt der Erfindung wird ein Kraftfahrzeug geschaffen, das ein Reinigungssystem mit einem erfindungsgemäßen Düsensystem umfasst.

Vorteile, Details, und Merkmale, die im Zusammenhang mit einem Aspekt der Erfindung beschrieben sind, gelten jeweils wechselseitig auch für die anderen Aspekte der Erfindung.

Nachfolgend werden Ausführungsbeispiele der Erfindung anhand von Zeichnungen näher erläutert. Darin zeigen:
- **Fig. 1**: eine schematische Ansicht eines Düsensystems gemäß einer bevorzugten Ausführungsform der Erfindung, wobei einer der Düsenkörper zusätzlich in einem vergrößerten Ausschnitt als Ansicht von unten dargestellt ist;
- **Fig. 2**: eine schematische Darstellung eines Kraftfahrzeugs, das mit einem Düsensystem gemäß einer bevorzugten Ausführungsform der Erfindung ausgestattet ist; und
- **Fig. 3**: einen Düsenkörper mit einer Düse, der von einer Abdeckung umgeben ist.

In den Figuren sind gleiche oder einander entsprechende Elemente jeweils mit den gleichen Bezugszeichen bezeichnet und werden daher nicht wiederholt beschrieben, sofern es nicht zweckmäßig erscheint. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

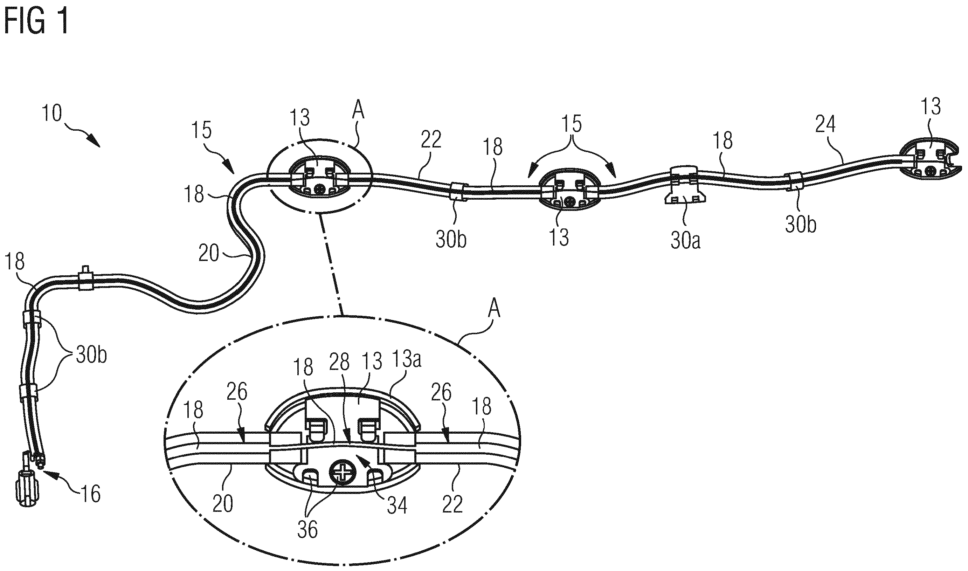

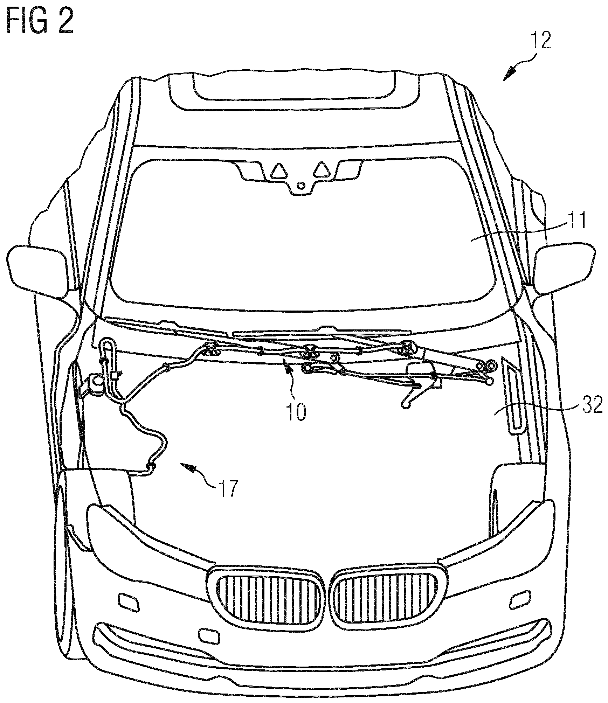

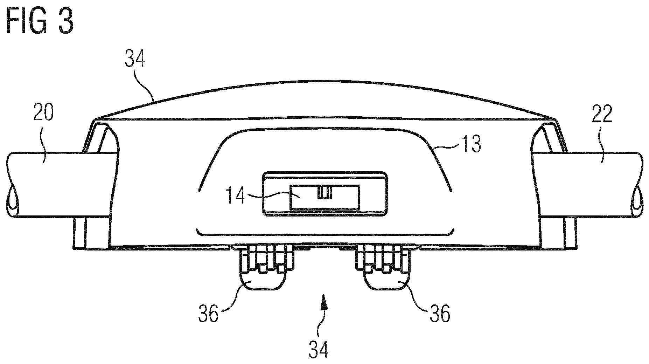

**Fig. 1** zeigt ein Düsensystem 10 zum Reinigen eines Fahrzeugteils gemäß einer bevorzugten Ausführungsform der Erfindung. Das Düsensystem 10 dient in dem hier dargestellten Beispiel dazu, eine Frontscheibe 11 eines Kraftfahrzeugs 12, das in **Fig. 2** gezeigt ist, zu reinigen. Das Düsensystem 10 bildet eine Düsenkette und hat mehrere Düsenkörper 13, in denen jeweils eine Düse 14 angeordnet ist, die in **Fig. 3** gezeigt ist, um eine Reinigungsflüssigkeit auf die Scheibe 11 des Fahrzeugs 12 zu sprühen.

Wie in **Fig. 1** gezeigt, sind die Düsenkörper 13 durch eine Fluidleitungsanordnung 15 miteinander verbunden, die dazu ausgestaltet ist, die Reinigungsflüssigkeit, wie beispielsweise Wischwasser, zu den Düsenkörpern 13 zu leiten. Hierzu ist die Fluidleitungsanordnung 15 mit einem Anschlusselement 16 versehen, das zum Anschluss an ein fluidbasiertes Reinigungssystem 17 des Fahrzeugs 12 ausgebildet ist.

Die Fluidleitungsanordnung 15 umfasst mehrere Fluidleitungen bzw. Abschnitte 20, 22, 24, welche ein Schlauchsystem bilden und die voneinander beabstandeten Düsenkörper 13 miteinander verbinden. Die als Schlauchstücke ausgebildeten Abschnitte 20, 22, 24 bilden zusammen mit den Düsenkörpern 13, welche jeweils einen Hohlraum oder Kanal zum Durchleiten des Fluids aufweisen, einen durchgehenden Fluidkanal.

In der Fluidleitungsanordnung 15 erstreckt sich in deren Längsrichtung ein Heizdraht 18, der auch durch jeden der Düsenkörper 13 verläuft. D.h., der Heizdraht 18 erstreckt sich durchgehend in Längsrichtung durch den Fluidkanal. Dabei hat der Heizdraht 18 in Abhängigkeit von seiner Position in dem Fluidkanal und somit in dem Düsensystem bzw. in der Düsenkette 10 Abschnitte mit unterschiedlichen Querschnitten. D. h., verschiedenen Abschnitte bzw. Teilstücke oder Teilbereiche des Heizdrahts 18 weisen unterschiedliche Querschnitte auf, wobei der Querschnitt des jeweiligen Abschnitts von seiner Position in dem Düsensystem 10 bzw. in dem Fluidkanal abhängt.

Der vergrößert dargestellte Ausschnitt A in Figur 1 zeigt in vergrößerter Darstellung den ersten Düsenkörper 13 des Düsensystems 10 als Ansicht von unten, zusammen mit den Leitungsabschnitten 20, 22, die an beiden Seiten des Düsenkörpers 13 angrenzen und mit diesem verbunden sind, um das Reinigungsfluid hindurchzuleiten. Der Düsenkörper 13 ist seitlich und oben von einem Abdeckelement 13a umgeben, während seine Unterseite 34 frei liegt. In dem Düsenkörper 13 hat der Heizdraht 18 einen wesentlich geringeren Querschnitt als in den Leitungsabschnitten 20, 22 der Fluidleitungsanordnung 15.

D. h., der Heizdraht 18 hat im Bereich der Leitungsabschnitte 20, 22, 24 einen verhältnismäßig großen Querschnitt, wohingegen der Querschnitt des Heizdrahts 18 im Bereich der Düsenkörper 13 und somit im Bereich der Düsen 14 sehr gering ist.

Die Abschnitte des Heizdraht 18 im Bereich der Leitungsabschnitte 20, 22, 24 sind mit dem Bezugszeichen 26 gekennzeichnet, während die Abschnitte des Heizdrahts 18 im Bereich des Düsenkörpers 13 mit dem Bezugszeichen 28 gekennzeichnet sind.

Durch die unterschiedlichen elektrischen Widerstände des Heizdrahts 18, d.h. in den Bereichen bzw. Leitungsabschnitten 22, 24, 26 mit hohem bzw. großem Querschnitt einerseits und in den Bereichen der Düsenkörper 13 mit dünnem bzw. geringem Querschnitt andererseits, wird erreicht, dass sich der Heizdraht 18 nur an den dünnen Stellen maßgeblich erwärmt, d. h. in den Heizdrahtabschnitten 28, welche in den Düsenkörpern 13 verlaufen. Diese Stellen bzw. Abschnitte 28 mit einem dünnen Querschnitt liegen vorteilhafterweise direkt in den Düsenkörpern 13 selbst. Auf diese Weise kann die eingebrachte Energie effizient dort genutzt werden, wo sie tatsächlich benötigt wird.

Der Durchmesser des Heizdrahts 18 im Bereich der Düsenkörper 13 bzw. in dem jeweiligen Abschnitt 28 beträgt vorteilhafterweise weniger als 1/5, bevorzugt weniger als 1/10 und insbesondere bevorzugt weniger als 1/20 seines Durchmessers in den Bereichen 26 der Fluidleitungsanordnung 15.

Durch die hier beschriebene Ausgestaltung des Heizdrahts 18 ist ein um ein Vielfaches niedrigerer Gesamtenergieeintrag in die Heizung bzw. den Heizdraht erforderlich, um im Bereich der Düsenkörper 13 die gleiche Heizleistung zu erreichen, wie bei einem Düsensystem mit einem durchgehenden Heizdraht, der einen konstanten Querschnitt hat, da sich dieser über seine gesamte Länge gleichermaßen erhitzen würde.

Das Anschlusselement 16 zum Anschluss der Düsenkette bzw. des Düsensystems 10 an das Reinigungssystem 17 des Fahrzeugs 12 wird durch ein Verbindungsstück in Form eines Schlauchverbinders und durch einen elektrischen Anschluss zum elektrischen Verbinden des Heizdrahts 18 mit einer in den Figuren nicht dargestellten Spannungsquelle gebildet.

Zur Befestigung der Düsenkette 10 an dem Fahrzeug 12 bzw. der Fahrzeugkarosserie sind an der Düsenkette 10 Befestigungselemente 30a, 30b angebracht, die an den verschiedenen Abschnitten 20, 22, 24 der Fluidleitungsanordnung 15 befestigt sind. Die Befestigungselemente 30a, 30b sind zum Beispiel als Klemmelemente oder Clips ausgebildet und dienen zur Führung der Fluidleitungsanordnung bzw. des Schlauchs, so dass dieser an der Frontklappe 32 des Fahrzeugs 12 befestigbar bzw. befestigt ist und dort gehalten wird.

Ergänzend zeigt **Fig. 3** eine Draufsicht auf die Düse 14, die in dem vom Abdeckelement 13a weitgehend umgebenen Düsenkörper 13 ausgebildet ist.

Die Unterseite 34 des Düsenkörpers 13 ist als Auflagefläche bzw. plattenartig ausgebildet. An der Unterseite 34 sind Vorsprünge 36 ausgebildet, die zum Befestigen der Düsenkette 10 in das Blech der Frontklappe 32 des Fahrzeugs 12 eingreifen.

Das erfindungsgemäße Düsensystem kann auf verschiedene Art und Weise am Fahrzeug 12 befestigt und zum Reinigen eines Fahrzeugteils, wie beispielsweise einer Frontscheibe, verwendet werden. Zum Beispiel kann das Düsensystem auch zur Befestigung an oder in einem Wischerarm des Scheibenwischersystems befestigt bzw. eingesetzt werden, um eine Fahrzeugscheibe zu reinigen. In anderen Ausführungsformen ist das Düsensystem zum Reinigen einer Heckscheibe eines Fahrzeugs ausgestaltet. In weiteren Ausführungsformen ist das Düsensystem zum Reinigen von Sensoren bzw. Sensoroberflächen, Kameras und anderen Fahrzeugteilen ausgebildet. Allgemein kann das Düsensystem für wasserbasierte bzw. fluidbasierte Reinigungssysteme zum Reinigen von Teilen bzw. deren Oberflächen in Fahrzeugen verwendet werden.

Zum Reinigen eines Fahrzeugteils wird mittels der Fluidleitungsanordnung 18 des Düsensystems 10 eine Reinigungsflüssigkeit den Düsenkörpern 13 zugeführt und von dort mittels der Düse 14, die in dem jeweiligen Düsenkörper 13 angeordnet ist, auf das Fahrzeugteil aufgebracht. Das Fahrzeugteil ist zum Beispiel die Windschutzscheibe bzw. Frontscheibe 11 des Fahrzeugs 12. Dabei wird durch den Heizdraht 18 im Bereich des Düsenkörpers 13 wesentlich mehr Wärmeenergie eingebracht als im Bereich der Fluidleitungsanordnung 15 bzw. der Fluidleitungsabschnitte 20, 22, 24.

Es sind unterschiedliche Ausführungsformen des Düsensystems möglich, beispielsweise wie in den Figuren dargestellt mit mehreren Düsenkörpern 13, oder auch mit nur einem Düsenkörper 13. Im Falle mehrere Düsenkörper 13 sind einige der Düsenkörper so ausgestaltet, dass die Reinigungsflüssigkeit durch einen oder mehrere Düsenkörper 13 hindurchfließt, um danach zu einem oder zu mehreren weiteren Düsenkörpern 13 zu gelangen. Beim Durchlaufen des jeweiligen Düsenkörpers 13 wird jeweils ein Teil der Reinigungsflüssigkeit durch dessen Düse 14 oder durch mehrere Düsen des Düsenkörpers auf das Fahrzeugteil bzw. die Scheibe 11 gesprüht und/oder gespritzt.

Durch die Erfindung wird die Effektivität der Reinigung erhöht, und gleichzeitig wird eine Kostenreduktion bei der Fertigung erzielt. Es erfolgt eine Reduktion des Energieverbrauchs, da die zum Heizen benötigte Energie punktuell dort eingebracht wird, wo sie benötigt wird. Darüber hinaus ermöglicht die Erfindung hocheffiziente Reinigungs-Düsensysteme für Fahrzeuge, ohne die Notwendigkeit von PTC-Elementen, so dass neben einer wesentlich einfacheren, automatisierten und daher kostengünstigeren Herstellung auch weitaus mehr Optionen für die Zulieferung der Bauelemente zur Verfügung stehen, was die Wirtschaftlichkeit der Herstellung noch zusätzlich erhöht.

### Bezugszeichenliste:

- 10: Düsensystem / Düsenkette
- 11: Scheibe / Frontscheibe
- 12: Kraftfahrzeug
- 13: Düsenkörper
- 13a: Abdeckelement
- 14: Düse
- 15: Fluidleitungsanordnung
- 16: Anschlusselement
- 17: Reinigungssystem
- 18: Heizdraht
- 20, 22, 24: Abschnitte der Fluidleitungsanordnung / Leitungsabschnitte
- 26: Abschnitte des Heizdrahts im Bereich der Leitungsabschnitte
- 28: Abschnitte des Heizdrahts im Bereich der Düsenkörper
- 30a, 30b: Befestigungselemente
- 32: Frontklappe
- 34: Unterseite
- 36: Vorsprung

## Patentansprüche

1. Düsensystem (10) zum Reinigen eines Fahrzeugteils (11), insbesondere einer Scheibe eines Kraftahrzeugs (12), umfassend
mindestens einen Düsenkörper (13) mit einer Düse (14) zum Aufbringen einer Reinigungsflüssigkeit auf das Fahrzeugteil (11),
eine Fluidleitungsanordnung (15), die zum Anschluss an ein fluidbasiertes Reinigungssystem (17) des Fahrzeugs (12) ausgebildet ist, um die Reinigungsflüssigkeit zu dem Düsenkörper (13) zu leiten,
einen elektrisch leitenden Heizdraht (18), der durch die Fluidleitungsanordnung (15) und durch den mindestens einen Düsenkörper (13) verläuft,
**dadurch gekennzeichnet, dass**
der Heizdraht (18) Abschnitte (26, 28) umfasst, die in Abhängigkeit von ihrer jeweiligen Position in dem Düsensystem (10) unterschiedliche Querschnitte aufweisen,
wobei der Heizdraht (18) innerhalb des Düsenkörpers (13) einen geringeren Querschnitt aufweist als in einem Bereich der Fluidleitungsanordnung (15) außerhalb des Düsenkörpers (13), so dass im Bereich des Düsenkörpers (13) wesentlich mehr Wärmeenergie als in der Fluidleitungsanordnung (15) eingebracht wird.

2. Düsensystem nach Anspruch 1, **dadurch gekennzeichnet, dass** die Fluidleitungsanordnung (15) mehrere Abschnitte (20, 22, 24) umfasst, die mehrere voneinander beabstandete Düsenkörper (13) miteinander verbinden, wobei die Abschnitte (20, 22, 24) der Fluidleitungsanordnung (15) und die Düsenkörper (13) einen durchgehenden Fluidkanal bilden, in dem sich der Heizdraht (18) durchgehend erstreckt.

3. Düsensystem nach einem der vorhergehenden Ansprüche, **dadurch gekennzeichnet, dass** die Fluidleitungsanordnung (15) durch ein Schlauchsystem gebildet ist, wobei die Düsenkörper (13) durch einzelne Schlauchabschnitte verbunden sind.

4. Düsensystem nach einem der vorhergehenden Ansprüche, **dadurch gekennzeichnet, dass** der Durchmesser des Heizdrahts (18) im Bereich der ein oder mehreren Düsenkörper (13) weniger als 1/5 seines Durchmessers im Bereich der Fluidleitungsanordnung (15) beträgt.

5. Verfahren zum Reinigen eines Fahrzeugteils (11), insbesondere einer Scheibe eines Kraftahrzeugs (12), umfassend die Schritte:
Zuführen einer Reinigungsflüssigkeit durch eine Fluidleitungsanordnung (15) zu mindestens einer in einem Düsenkörper (13) ausgebildeten Düse (14); und
Aufbringen der Reinigungsflüssigkeit auf das Fahrzeugteil (11) mittels der Düse (14);
wobei der Düsenkörper (13) durch einen Heizdraht geheizt wird, der in der Fluidleitungsanordnung (15) zum Düsenkörper verläuft,
und wobei im Bereich des Düsenkörpers (13) mittels unterschiedlicher Querschnitte des Heizdrahts (18) wesentlich mehr Wärmeenergie eingebracht wird als in der Fluidleitungsanordnung (15).

6. Verfahren nach Anspruch 5, **dadurch gekennzeichnet, dass** die Reinigungsflüssigkeit mittels der Fluidleitungsanordnung (15) mehreren Düsenkörpern (13) zugeführt wird, die jeweils mit dem Heizdraht (18) gezielt beheizt werden.

7. Verfahren nach Anspruch 5 oder 6, **dadurch gekennzeichnet, dass** es mit einem Düsensystem nach einem der Ansprüche 1 bis 4 durchgeführt wird.

8. Kraftfahrzeug (12), **dadurch gekennzeichnet, dass** es ein Reinigungssystem (17) mit einem Düsensystem nach einem der Ansprüche 1 bis 4 umfasst.

## Claims

1. Nozzle system (10) for cleaning a vehicle part (11), in particular a window of a motor vehicle (12), comprising
at least one nozzle body (13) having a nozzle (14) for applying a cleaning liquid to the vehicle part (11),
a fluid line arrangement (15), which is configured for connection to a fluid-based cleaning system (17) of the vehicle (12), in order to conduct the cleaning liquid to the nozzle body (13),
an electrically conducting heating wire (18) which runs through the fluid line arrangement (15) and through the at least one nozzle body (13),
**characterized in that**
the heating wire (18) comprises portions (26, 28) which have different cross sections in dependence on their respective position in the nozzle system (10),
wherein the heating wire (18) has a smaller cross section within the nozzle body (13) than in a region of the fluid line arrangement (15) outside of the nozzle body (13), such that significantly more heat energy is introduced in the region of the nozzle body (13) than in the fluid line arrangement (15).

2. Nozzle system according to Claim 1, **characterized in that** the fluid line arrangement (15) comprises a plurality of portions (20, 22, 24) which connect a plurality of nozzle bodies (13) which are spaced apart from one another to one another, wherein the portions (20, 22, 24) of the fluid line arrangement (15) and the nozzle bodies (13) form a continuous fluid channel in which the heating wire (18) continuously extends.

3. Nozzle system according to either of the preceding claims, **characterized in that** the fluid line arrangement (15) is formed by a hose system, wherein the nozzle bodies (13) are connected by individual hose portions.

4. Nozzle system according to one of the preceding claims, **characterized in that** the diameter of the heating wire (18) in the region of the one or more nozzle bodies (13) is less than 1/5 of its diameter in the region of the fluid line arrangement (15).

5. Method for cleaning a vehicle part (11), in particular a window of a motor vehicle (12), comprising the steps:
feeding a cleaning liquid through a fluid line arrangement (15) to at least one nozzle (14) configured in a nozzle body (13); and
applying the cleaning liquid to the vehicle part (11) by means of the nozzle (14);
wherein the nozzle body (13) is heated by a heating wire which runs in the fluid line arrangement (15) as far as the nozzle body,
and wherein, by means of different cross sections of the heating wire (18), significantly more heat energy is introduced in the region of the nozzle body (13) than in the fluid line arrangement (15).

6. Method according to Claim 5, **characterized in that** the cleaning liquid is fed to a plurality of nozzle bodies (13) by means of the fluid line arrangement (15), each of said nozzle bodies being heated in a targeted manner by means of the heating wire (18).

7. Method according to Claim 5 or 6, **characterized in that** it is carried out by means of a nozzle system according to one of Claims 1 to 4.

8. Motor vehicle (12), **characterized in that** it comprises a cleaning system (17) having a nozzle system according to one of Claims 1 to 4.

## Revendications

1. Système à buses (10) pour nettoyer une pièce de véhicule (11), en particulier une vitre d'un véhicule automobile (12), comprenant
au moins un corps de buse (13), ayant une buse (14) pour appliquer un liquide de nettoyage sur la pièce de véhicule (11),
un agencement (15) de conduites de fluide, qui est conçu pour être raccordé à un système de nettoyage à base de fluide (17) du véhicule (12) afin d'acheminer le liquide de nettoyage vers le corps de buse (13),
un fil chauffant (18) électriquement conducteur, qui traverse l'agencement (15) de conduites de fluide et ledit au moins un corps de buse (13),
**caractérisé en ce que**
le fil chauffant (18) comprend des portions (26, 28) qui présentent des sections transversales différentes en fonction de leur position respective dans le système à buses (10),
le fil chauffant (18) présentant une section transversale plus petite à l'intérieur du corps de buse (13) que dans une zone de l'agencement (15) de conduites de fluide à l'extérieur du corps de buse (13), de sorte que l'énergie thermique introduite dans la zone du corps de buse (13) est nettement supérieure à celle introduite dans l'agencement (15) de conduites de fluide.

2. Système à buses selon la revendication 1, **caractérisé en ce que** l'agencement (15) de conduites de fluide comprend une pluralité de portions (20, 22, 24) qui relient entre elles plusieurs corps de buse (13) espacés les uns des autres, les portions (20, 22, 24) de l'agencement (15) de conduites de fluide et les corps de buse (13) formant un canal de fluide continu dans lequel s'étend de manière continue le fil chauffant (18).

3. Système à buses selon l'une des revendications précédentes, **caractérisé en ce que** l'agencement (15) de conduites de fluide est formé par un système de tuyaux, les corps de buse (13) étant reliés par des portions de tuyau individuelles.

4. Système à buses selon l'une des revendications précédentes, **caractérisé en ce que** le diamètre du fil chauffant (18) dans la zone du ou des corps de buse (13) est inférieur à 1/5 de son diamètre dans la zone de l'agencement (15) de conduites de fluide.

5. Procédé de nettoyage d'une pièce de véhicule (11), en particulier d'une vitre d'un véhicule automobile (12), comprenant les étapes suivantes :
alimenter en liquide de nettoyage, par l'intermédiaire d'un agencement (15) de conduites de fluide, au moins une buse (14) formée dans un corps de buse (13) ; et
appliquer le liquide de nettoyage sur la pièce de véhicule (11) au moyen de la buse (14) ;
le corps de buse (13) étant chauffé par un fil chauffant qui s'étend dans l'agencement (15) de conduites de fluide vers le corps de buse,
et une quantité d'énergie thermique nettement supérieure étant apportée dans la zone du corps de buse (13) au moyen de différentes sections transversales du fil chauffant (18) à celle apportée dans l'agencement (15) de conduites de fluide.

6. Procédé selon la revendication 5, **caractérisé en ce que** le liquide de nettoyage est acheminé au moyen de l'agencement (15) de conduites de fluide vers plusieurs corps de buse (13) qui sont chacun chauffés de manière ciblée avec le fil chauffant (18).

7. Procédé selon la revendication 5 ou la revendication 6, **caractérisé en ce qu'**il est mis en œuvre avec un système à buses selon l'une des revendications 1 à 4.

8. Véhicule automobile (12), **caractérisé en ce qu'**il comprend un système de nettoyage (17) avec un système à buses selon l'une des revendications 1 à 4.
